# NEW EUROPEAN PATENT SPECIFICATION

(11) **EP 0 231 965 B2**
(45) Date of publication and mention of the opposition decision: **17.07.1996**
(45) Mention of the grant of the patent: 18.03.1992
(21) Application number: 87200062.5
(22) Date of filing: 16.01.1987
(51) Int. Cl.: F16D 55/14, F16D 65/54

(54) **A device with hydraulic actuator cylinder for directly operating vehicle ball-and-ramp mechanism brakes**
Vorrichtung mit hydraulischem Zylinder zur direkten Betätigung einer Kugel-Rampen-Fahrzeugbremse
Dispositif à cylindre d'actionnement hydraulique pour actionner directement des freins de véhicule à mécanisme à billes et rampes

(30) Priority: 27.01.1986 IT 1918986
(43) Date of publication of application: 12.08.1987
(73) Proprietor: SIRMAC OFFICINE MECCANICHE S.p.A., I-40010 Calcara Bologna (IT)
(72) Inventor: Ranzato, Giovanni, I-40050 S. Martino di Monte S. Pietro (IT)
(74) Representative: Faraggiana, Vittorio, Dr. Ing.

(56) References cited:
- EP-A- 0 040 027
- DE-A- 2 349 734
- DE-A- 2 640 092
- DE-A- 2 640 093
- FR-A- 2 089 661
- FR-A- 2 491 416
- GB-A- 1 167 926
- GB-A- 1 298 995
- US-A- 2 526 149
- US-A- 2 732 036
- US-A- 2 883 007
- US-A- 3 343 632
- US-A- 3 482 664
- US-A- 4 374 554

## Description

The invention relates to a device according to the preamble of claim 1.

Ball-and-ramp mechanism brakes are known, particularly for vehicles, in which between two opposed pressure plates are located balls housed in oppositely inclined recessed of diminishing depth formed in the two plates, such that the reciprocal rotation of the two plates causes them to move apart and so to move into engagement with the friction discs which are urged into engagement with radial surfaces.

Into such brakes, the general structure of which is well known to persons with ordinary skill in the art, the present invention proposes more specifically to introduce a hydraulic operating device for reciprocally rotating the pressure plates, which device acts between two lugs projecting radially therefrom.

According to the known art (see US-A-3343632), use is made as hydraulic actuator of a so-called fixed cylinder actuator: a cylinder is mounted solidly with a housing, usually the same housing that contains the brake unit, and there are movably located within the cylinder two counterposed pistons actuated by the hydrostatic pressure generated by a pump operated by the movement of the foot pedal. It is known that, during its operation, the plate of the ball-and-ramp mechanism brake must be able to describe a certain rotation within its housing, in both directions, depending on whether the vehicle is in forward or reverse movement when the brakes are applied, i.e. one or the other of the opposed plates between which the balls are mounted is taken against a stop abutment, while the actuator cylinder causes the other plate to rotate.

Depending therefore on whether the vehicle is in forward or reverse movement at the time of braking, only one of the two pistons within the hydraulic actuator cylinder has to travel the entire distance necessary to take up clearance (when the friction discs are new), or also to take up clearance during the life of the brake.

The larger the number of friction discs used and the greater the wear, the greater is the travel required of each piston.

A solution of the kind described above has the considerable disadvantages listed below:
1) It makes it impossible to use the maximum permissible number of friction discs for a given size of brake, and this on account of the very great travel that such use would require of the pistons, which is incompatible with the limited bulk dimensions usually available. In addition, a large piston travel reduces that portion of the piston that is guided when the piston is thrust outside the hydraulic cylinder, with resulting wear and loss of seal.
2) The fact that, for the reasons stated, a large number of friction discs cannot be used, leads to the adoption of a brake which is larger but which employs a smaller number of friction discs - thus tending to increase production costs.
   To transmit the same braking moment higher actuating pressures and/or smaller ramp angles have to be employed. Pressure plate separation being equal, with a ramp angle of about 18°- 20° an even greater travel is required of the hydraulic cylinder pistons.
3) Given that mechanical rod, lever or cam devices are as a rule associated with hydraulic cylinder brake actuation, the clearance adjustment made by mechanical regulation brings no benefit as regards piston travel in that such regulation increases the distance between the two surfaces of the pressure plates where the pistons act.
4) Given the geometry of a fixed cylinder in which the line of action of the pistons is fixed with respect to the centre of the brake disc, when the relative distance between the pressure plates is varied the point of contact between piston and pressure plate lug surface is shifted. The drag between the surfaces increases with increase in the angle between the two pressure plates, i.e. with lengthening of piston travel. With the hydraulic cylinder disposed at an angle, with respect to a plane normal to the axis of the brake, equal to the ramp angle (this being an already proposed solution called "tangential cylinder") the pistonipressure plate contact drag decreases only in part, since the ratio between axial travel and circumferential deviation of the pressure plates (equal to the tangent of the ramp angle of the ball recesses) is normally between 0.32 and 0.38; hence the drag due to the separation of the pressure plates is preponderant.
5) A limitation of the travel for taking up friction disc wear by means of mechanical limitation of the deviation of the pressure plates or, even less satisfactorily, by a limitation of the length of the ball recesses, is unacceptable in point of safety in use of the vehicle. For various reasons, such as improper use, lack of cooling due to a low level or even total lack of oil, friction disc wear can come to be such as even to exceed the axial value pre-established by the stop abutment. In such case the brake proves wholly inefficient because neither the mechanical operating devices nor the hydraulic operating devices are able to give the hydraulic actuator the pressure necessary to urge the plates and friction discs into engagement.
6) In the case of application of the fixed hydraulic cylinder to dry brakes, what has been said at the various preceding points is exacerbated by the fact that the thickness available for friction disc material wear is considerable. Although normally only two friction material discs are employed, the total axial travel for the maximum permissible wear is generally at least double that foreseen for multiple-disc oil-bath brakes. The cylinder can also be fixed to the housing in an indirect manner, particularly jointed to a place which is fixed to the housing (for example this can be seen in DE-A-26 40 093 and EP-A-040 027). This avoids only drawback cited under point 4 the other problems remaining unsolved.

The object of the present invention is to obviate the above mentioned disadvantages of the known operating devices heretofore described. To attain such object the invention embodies a device as specified in claim 1.

The structural and functional characteristics of the invention, and its advantages over the known art, will become more apparent from an examination of the following illustrative description with reference to the appended diagrammatic drawings, of an example of practical embodiment thereof. In the drawings:
Figure 1 is a diagrammatic diametrical section of a brake employing an operating device according to the invention;
Figure 2 is a section on the line II-II of Figure 1;
Figure 3 is a sectional particular of the brake of Figure 1 and 2;
Figures 4 and 5 are detailed illustrations of variants of embodiment.

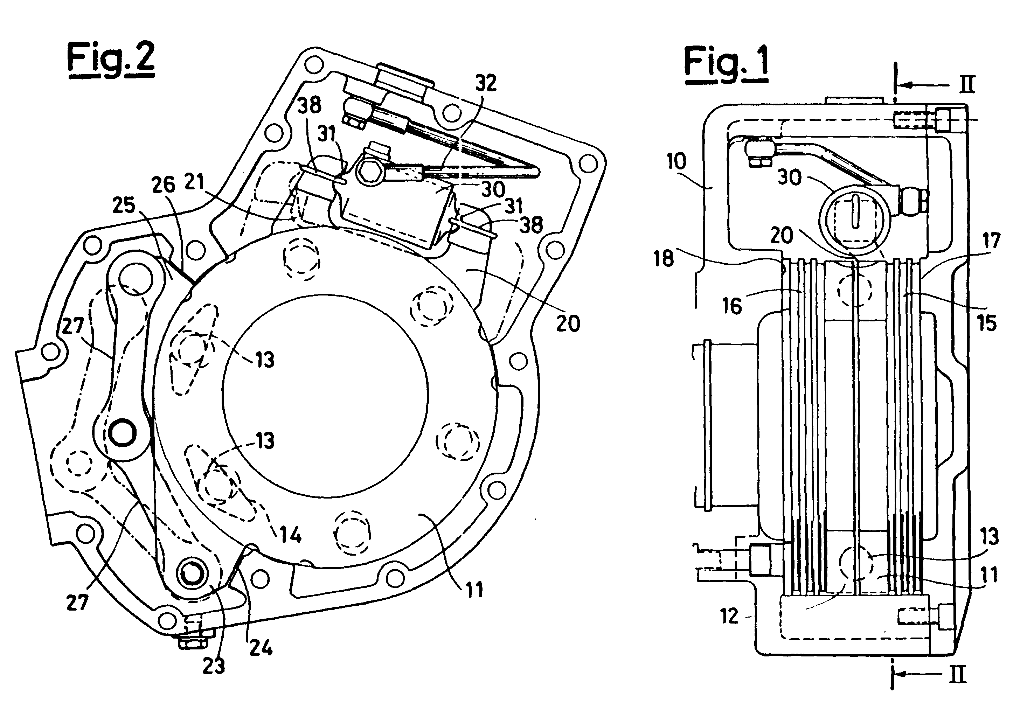

The brake illustrated in Figures 1 and 2 has a structure per se known, so that only those of its components which have a particular bearing on the operating device according to the invention will here be mentioned.

The ball-and-ramp mechanism brake comprises a housing 10 within which are guided to rotate two opposite pressure plates 11 and 12 between which are located balls 13 housed in ramp recesses 14 so that the movement of reciprocal rotation of the plates 11 and 12 urges two sets of discs 15 and 16 against respective annular surfaces 17 and 18.

The plate 11 features a lug 20 and the plate 12 a lug 21 between which, according to the invention, is mounted the cylinder 30. The plate 11 also bears a further radial projection 23 intended to abut a surface 24, while the plate 12 bears the projection 25 intended to abut a surface 26. To the two projections 23 and 25 there are also pivoted linkage rods 27 for the manual operation of the brake, which it is not here pertinent to describe in detail.

According to the invention, therefore, the cylinder 30 is in no way restrained to the housing 10 but is simply mounted between the two lugs 20, 21 preferably in the region of hemispherical support surfaces 31 for its ferrules 33, for a free variation of support orientation with minimum friction. The cylinder 30 is supplied with fluid under pressure through a hose 32 which in turn received the hydraulic fluid at the pressure determined by the movement of the brake pedal, in a fully known manner.

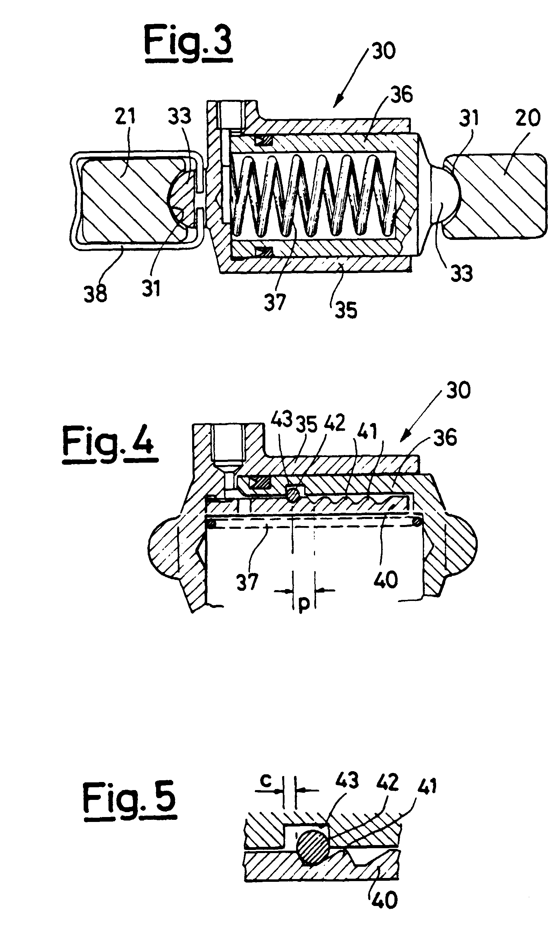

Figure 3 shows a detail of the cylinder 30, which comprises an outer cylinder 35 in which there is movably located a piston 36 which accepts internally the compressed spring 37. The head 33 of the cylinder 35 is shown as restrained to the lug 21 by a retaining spring 38, the purpose of which is to ensure that the cylinder 30 does not leave its seat if the lugs 20 and 21 are reciprocally moved apart by an external control, for example the,mechanical parking or emergency brake control.

Springs 38 or similar restraining means can be provided at both the ferrules 33 supporting the cylinder, especially if it is feared that not even the action of an expansion spring 37 will assure the permanent situation of support, both by reason of friction and by reason of hydraulic resistances in the cylinder 30 operating circuit.

Persons with ordinary skill in the art will have no difficulty in understanding the behaviour of the device according to the invention. If for example it is supposed that the discs 15 and 16 are braked when they rotate anticlockwise seen in the direction of Figure 2, so that the pressure plates 11 and 12 are thrust to rotate in the same direction, the plate 11 will carry the projection 23 to abut 24 and the sending of hydraulic fluid to the cylinder 30 will cause it to expand and displace the lug 21 to move the plate 12 in the direction that causes the plates to move apart and so effect braking. The dashed and dotted line indicates the position that will be taken up by the lug 21.

If braking takes place as a result of the rotation of the discs 15 and 16 in a direction inverse to the one described, the projection 25 of the pressure plate 12 will abut the respective stop 26 of the housing, while the lug 20 will be moved by the expansion of the cylinder 30.

It will be noted that, in both cases, the travel of the cylinder 30, which floats freely with the pressure plates when these come to be placed against their respective abutments by the direction of rotation of the discs that are braked, remains unchanged.

This shows that, bulk being equal, between a fixed cylinder of known type and a free-floating cylinder according to the invention, if friction disc wear and/or clearance is equal, the floating cylinder has the same travel both when the vehicle is in forward movement and when it is in reverse movement. It is likewise evident that the length of the guide between the two telescopic portions of the cylinder 30 is considerable, and therefore permits decidedly extended travel-distances.

An operating device according to the invention has the following advantages:
1) Owing to the greater travel possible even with normal guide lengths, there are no problems relating to the number of friction discs that can be adopted, and so more economical disc brakes can be employed.
2) Using a free-floating hydraulic cylinder it is still possible to adopt simultaneously a linkage rod or lever mechanism for operation as a parking and/or emergency brake. In this case, too, friction disc clearance is adjusted by regulating the mechanical operating members; although this regulation causes the cylinder travel-distance to increase this is easily allowed by the elevated expansion capacity of the cylinder.
3) Again owing to the displacement and expansion capacity of the free-floating cylinder of the invention brakes with a larger number of smaller-size discs can be used for the same braking moment. This leads to a fall in the specific pressure on the discs and thus to a decrease of the operating hydraulic pressure. A further fall in line pressure can be obtained by using very small ramp-angles, precisely because the corresponding increase in the travel-distance of the free-floating piston does not give rise to insurmountable problems. It is worth recalling that a low specific pressure on the friction material results in more gradual braking, appreciable lower wear, and silent operation.
4) As the two external lugs of the two pistons are housed in the respective recesses in the lugs of the pressure plates, when the angle between the plates varies the variation of the position of contact between the two surfaces is negligible, so that in practice there is no wear due to drag. The same applies during the axial movement of the two plates which, for the reasons stated heretofore, is much less than the movement involved when they are moved apart. In order to reduce this minimal drag still further, the forms of the head and recess have been developed so that their profiles are to the greatest possible extent matched, with the result that a drag-free rolling is obtained. In addition, as the piston is free-floating in space at each moment, it takes on the minimum work equilibrium position and therefore also the position that minimizes deformation of the hose.
   The material for the flexible hose 32 for the hydraulic fluid under pressure will be chosen so as to be able to use any type of brake fluid (vegetable-based, mineral-based or synthetic); the burst pressure and temperature resistance of the flexible hose must be a great deal higher than the operating pressure and temperature.
5) A free-floating cylinder does not call for any limitation on the deviation movement of the discs. Should the friction discs show anomalous wear the brake will in every case be able to develop a sufficient axial pressure, the contact will take place between surfaces with a coefficient or friction lower than the foreseen coefficient, but there will still be a residual braking moment.
   This does not of course exonerate the user from maintaining correct clearance so as to prevent the travel of the hydraulic pump from being inadequate for the throughput required by the actuator cylinder, this being an eventuality in all hydraulic braking systems.
6) The fact that the free-floating cylinder can have extensive travel-distance also makes it particularly suitable for use with dry ball-and-ramp mechanism brakes in which the deviation of the pressure plates is considerably higher than in oil-bath brakes on account of the greater degree of permissible wear of the friction material.
7) Internally, the free-floating cylinder is provided with a spring so sized as to create a thrust between the two elements sufficient to maintain the contact between cylinder and lugs, though without overcoming the force of the actuator cylinder return springs. When the wear of the friction discs is regulated by acting on the link rod of the mechanical operation system, the internal spring of the cylinder continues to exert a reactive force to maintain the contact and to draw from the brake fluid reservoir the amount of fluid called for by the deviation due to the regulation.

When much penalized hydraulic systems are employed and line resistances are high, if the parking or emergency brake is applied sharply, in order to prevent the free-floating cylinder from leaving its seats despite the action of the internal spring, provision is made for one or two latching members between the two pistons and the seats on the pressure plate lugs.

This represents a further safety measure in the case of failure to regulate friction disc clearance inasmuch as, on account of its geometry, before leaving the seats the cylinder allows an angular deviation between the two pressure plates such as corresponds to the maximum wear of the discs.

If the ball-and-ramp mechanism brake cannot or it is not wished to be used as parking or emergency brake with separate operation, for which reason no mechanical operation is provided, the possibility of taking up the wear of the friction discs by means of the mechanical link rod may cease to exist. In such case externally operated mechanical adjusters must be used, the function of which is to cause a relative rotation between the two pressure plates so as to take up the wear and allow the hydraulic cylinder a travel-distance compatible with the displacement of the operating pump.

The adoption of mechanical adjusters requires apertures in the brake housing with relative seals and also operations of a somewhat sensitive kind such as take account of the correct clearance to give the friction discs after each adjustment.

To obviate such operations and also in the case of failure to make the adjustment in question due to error, oversight or abnormally rapid wear, according to the invention a variant of the embodiment as per Figure 3 has been developed by introducing an automatic device for adjusting disc clearance.

This device, shown diagrammatically in Figure 4, is a variant of the cylinder 30 and comprises a tubular portion 40 solid with one of the telescopic portions, for instance 35, on which portion 40 are formed circumferential seats, which are parallel and which have a suitable pitch p. These seats are formed between teeth 41, the sides of which are differently inclined with respect to the axis of the portion 40. An annular spring 42 is housed slackly within a seat 43 of the portion 36, and projects from the seat 43 so as to engage the teeth 41.

The manner of operating of the device is as follows:
The fluid from the braking system enters the cylinder 30 and causes the distancing of the two portions 35 and 36; the slight inclination of the sides of the teeth 41 of the portion 40 causes, in the relative movement with the portion 36, the annular spring 42 to rise in its seat 43 and, if the shift between the two portions 35, 36 attains the value of the pitch p between the teeth 41 of the portion 40, the spring 42 skips the next tooth. The marked inclination of the left shoulders of the teeth 41 provides a resistance to the return of the two portions 35, 36 greater than the return action of the actuator spring.

The clearance adjustment stroke is effected during the expansion phase of the cylinder, inasmuch as when the relative stroke of the two portions 35, 36 exceeds the pitch of the teeth 41 and the spring 42 is latched onto a new tooth, the cylinder 40 might not retract when the actuating pressure for freeing the brake ceases. Accordingly, the seat 43 of the spring 42 has an axial dimension greater than the diameter of the spring 42 so as to allow a retraction stroke C (Figure 5) of the cylinder 30 sufficient to ensure the disengagement of the friction discs.

## Claims

1. A device for directly operating vehicle ball-and-ramp mechanism brakes of the kind in which a hydraulic cylinder (30) acts between radial lugs (20, 21) of the brake pressure plates (11, 12) located in a housing (10), rotating one of them, such rotation moving them apart by effect of the balls (13) located between the plates (11, 12), bound to said radial lugs (20, 21) for moving them away wherein each plate (11, 12) is rotating in the housing (10) to lean against a surface (24, 26) of the housing (10) in the direction opposite to the thrust direction of the cylinder (30) during the braking, characterised in that the cylinder (30) consiste of two telescopic portions (35, 36) which themselves form the pistons and is free floating in said housing (10), and that the said telescopic portions (35, 36) rest on said lugs (20, 21) through the intermediary of rolling contact surfaces (31).

2. A device as described in claim 1, wherein the said telescopic portions (35, 36) rest on said lugs (20, 21) and are retained respectively against them by removable restraining elements.

3. A device as described in claim 1, wherein between the said two telescopic portions (35, 36) there acts a spring (37) disposed internally to them so as to thrust each of them against its respective lug (20, 21).

4. A device as described in claim 1, wherein there is interposed between the two said telescopic portions (35, 36) a unidirectional engagement means (40, 41, 42, 43) to create a mechanical resistance supplementary to the approach stroke of the said telescopic portions (35, 36) greater than the approach force caused by the thrust of the lugs (20, 21).

5. A device as described in claim 4, wherein the said unidirectional engagement means (40, 41, 42, 43) allows the free telescopic portions (35, 36) to come together before creating the said supplementary mechanical resistance.

6. A device as described in claim 5, wherein the said unidirectional engagement means (40, 41, 42, 43) consist of a sawtooth element (40) solid with one (35) of the parts, with which there engages a member (42) restrained, with axial clearance, to the other (36) of the parts, the said axial clearance being less than the pitch of the teeth.

7. A device as described in claim 6, wherein within the said two telescopic portions (35, 36) provision is made for a tubular portion (40) solid with one (35) of said telescopic portions and having a toothed outer surface (41) with which is engaged an annular spring (42) housed slackly within a circumferential seat (43) provided in the other telescopic portion (36).

## Patentansprüche

1. Steuervorrichtung mit hydraulischem Arbeitszylinder zur direkten Einwirkung auf Kugel-Rampen-Bremsen für Kraftfahrzeuge, bei der ein hydraulischer Zylinder (30) zwischen radialen Klappen (20, 21) von in einem Gehäuse (10) angeordneten Drucktellern (11, 12) der Bremse wirkt, wobei einer von ihnen verschwenkt wird, wobei diese Verschwenkung durch Wirkung der zwischen den Tellern (11, 12) angeordneten Kugeln (13) die Teller (11, 12) auseinanderbewegt, wobei der Zylinder an den radialen Klappen (20, 21) zu deren Auseinanderbewegung festliegt, wobei jeder Teller (11, 12) im Gehäuse (10) verschwenkbar ist, um auf eine Oberfläche (24, 26) des Gehäuses (10) in einer zur Schubrichtung des Zylinders (30) abgewandten Richtung während des Bremsvorganges zur Anlage zu kommen, dadurch gekennzeichnet, daß der Zylinder (30) aus zwei teleskopartigen Teilen (35, 36) besteht, die selbst die Kolben bilden, und im Gehäuse (10) frei verschwenkbar ist und daß die teleskopartigen Teile (35, 36) an den Klappen (20, 21) mittels der Walzberührungsflächen (31) anliegen.

2. Vorrichtung nach Anspruch 1, dadurch gekennzeichnet, daß die teleskopartigen Teile (35, 36) an den Klappen (20, 21) anliegen und jeweils auf ihnen durch unbewegbare Befestigungsmittel gehalten sind.

3. Vorrichtung nach Anspruch 1, dadurch gekennzeichnet, daß zwischen den teleskopartigen Teilen (35, 36) eine Feder (37) wirkt, die innerhalb von ihnen derart angeordnet ist, daß jede gegen die jeweilige Klappe (20, 21) gedrückt wird.

4. Vorrichtung nach Anspruch 1, dadurch gekennzeichnet, daß zwischen den zwei teleskopartigen Teilen (35, 36) einsinnig gerichtete Eingriffsmittel (40, 41, 42, 43) derart angeordnet sind, daß zum Annäherungshub der teleskopartigen Teile (35, 36) ein zusätzlicher mechanischer Widerstand erzeugt wird, der größer ist als die von der Schubkraft der Klappen (20, 21) bestimmte Annäherungskraft.

5. Vorrichtung nach Anspruch 4, dadurch gekennzeichnet, daß die gleichsinnig gerichteten Eingriffsmittel (40, 41, 42, 43) eine Annäherung der freien teleskopartigen Teile (35, 36) vor ihrem Eingriff zur Erzeugung des zusätzlichen mechanischen Widerstandes erlauben.

6. Vorrichtung nach Anspruch 5, dadurch gekennzeichnet, daß die gleichsinnig gerichteten Eingriffsmittel (40, 41, 42, 43) aus einem an einem der Teile (35) festliegenden sägezahnartigen Element (40) bestehen, auf welchem ein Element (42) eingreift, das mit axialem Spiel am anderen der Teile (36) festliegt, wobei dieses axiale Spiel kleiner als die Zahnteilung ist.

7. Vorrichtung nach Anspruch 6, dadurch gekennzeichnet, daß innerhalb der zwei teleskopartigen Teile (35, 36) ein Rohrstück (40) vorgesehen ist, das an einem der teleskopartigen Teile (35) festliegt und eine gezahnte Oberfläche (41) aufweist, mit der eine Ringfeder (42) in Eingriff steht, die innerhalb eines im anderen teleskopartigen Teil (36) vorgesehenen Kreissitz (43) locker aufgenommen ist.

## Revendications

1. Dispositif pour actionner directement des freins de véhicule à mécanisme à billes et à rampes du type dans lequel un cylindre hydraulique (30) agit entre des pattes radiales (20, 21) des plaques de pression (11, 12) du frein situées dans un boîtier (10), en faisant tourner l'une d'elle, cette rotation les écartant sous l'effet des billes (13) disposées entre les plaques (11, 12) qui sont reliées auxdites pattes radiales (20, 21) pour les éloigner l'une de l'autre, dans lequel chaque plaque (11, 12) tourne dans le boîtier (10) pour venir s'appliquer contre une surface (24, 26) du boîtier (10) dans la direction opposée à la direction de la poussée du cylindre (30) pendant le freinage, caractérisé en ce que le cylindre (30) consiste en deux portions télescopiques (35, 36) formant elles-mêmes les pistons et flotte librement dans ledit boîtier (10), et que lesdites portions télescopiques (35, 36) reposent sur lesdites pattes (20, 21) par l'intermédiaire de surfaces de contact roulantes (31).

2. Dispositif selon la revendication 1, dans lequel lesdites portions télescopiques (35, 36) reposent sur lesdites pattes (20, 21) et sont retenues respectivement contre elles par des éléments de retenue amovibles.

3. Dispositif selon la revendication 1, dans lequel un ressort (37) disposé à l'intérieur desdites deux portions télescopiques (35, 36) agit de manière à pousser chacune d'elles contre sa patte respective (20, 21).

4. Dispositif selon la revendication 1, dans lequel est interposé entre lesdites deux portions télescopiques (35, 36) un moyen d'engagement unidirectionnel (40, 41, 42, 43) pour créer une résistance mécanique supplémentaire à la course d'approche desdites portions télescopiques (35, 36) qui est supérieure à la force d'approche provoquée par la poussée des pattes (20, 21).

5. Dispositif selon la revendication 4, dans lequel lesdits moyens d'engagement unidirectionnels (40, 41, 42, 43) permettent aux portions télescopiques libres (35, 36) de s'assembler avant de créer ladite résistance mécanique supplémentaire.

6. Dispositif selon la revendication 5, dans lequel lesdits moyens d'engagement unidirectionnels (40, 41, 42, 43) consistent en un élément en dents de scie (40) d'un seul tenant avec l'une (35) des parties, avec lequel vient en engagement un organe (42) retenu avec un jeu axial par l'autre (36) des parties, ledit jeu axial étant inférieur au pas des dents.

7. Dispositif selon la revendication 6, dans lequel est prévue dans lesdites deux portions télescopiques (35, 36), une portion tubulaire (40) d'un seul tenant avec l'une (35) desdites portions télescopiques et possédant une surface externe dentée (41) avec laquelle est en engagement un ressort annulaire (42) logé de façon lâche à l'intérieur d'un siège circonférentiel (43) prévu dans l'autre portion télescopique (36).
